(19) Europäisches Patentamt
European Patent Office
Office européen des brevets

(11) **EP 3 070 939 A1**

(12) **EUROPEAN PATENT APPLICATION**
published in accordance with Art. 153(4) EPC

(43) Date of publication:
**21.09.2016 Bulletin 2016/38**

(51) Int Cl.:
***H04N 9/31*** *(2006.01)*          ***G03B 21/00*** *(2006.01)*

(21) Application number: **14862552.8**

(86) International application number:
**PCT/KR2014/010842**

(22) Date of filing: **12.11.2014**

(87) International publication number:
**WO 2015/072737 (21.05.2015 Gazette 2015/20)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **12.11.2013   KR 20130136803**

(71) Applicant: **IUCF-HYU (Industry-University Cooperation Foundation Hanyang University)**
**Seoul 133-791 (KR)**

(72) Inventors:
• **HAN, Young Geun**
  **Seoul 143-754 (KR)**
• **KIM, Sun Duck**
  **Gunsan-si**
  **Jeollabuk-do 573-753 (KR)**

(74) Representative: **Vogel, Andreas et al**
**Bals & Vogel**
**Universitätsstrasse 142**
**44799 Bochum (DE)**

(54) **SPECKLE SUPPRESSION UNIT AND LASER PROJECTION IMAGING DEVICE HAVING SAME**

(57)    A laser projection imaging device according to an embodiment of the present invention comprises: a light source having a red (R) laser, a green (G) laser, and a blue (B) laser to generate a laser beam; and a speckle suppression unit for suppressing a speckle from the laser beam provided from the light source, wherein the speckle suppression unit may include a phase modulation mirror for suppressing the speckle by reflecting the laser beam from the light source and modulating the phase and the angle; and a moving stage which is coupled to the phase modulation mirror to move the phase modulating mirror. According to the embodiment of the present invention, the speckle suppression unit with a simple configuration featuring the phase modulation mirror and the moving stage can suppress the speckle by modulating the phase of the laser beam provided from the light source into a phase unrecognizable to the human eye, and furthermore can minimize the loss of light and implement a high resolution on the display through the speckle suppression.

**FIG. 1**

**Description**

Technical Field

The present invention relates to a speckle suppressor and a laser projection imaging device, and more particularly, to a speckle suppressor and a laser projection imaging device configured to suppress a speckle by modulating a phase of a laser beam to a phase unrecognizable to a human eye based on reflection angle adjustment of a phase modulation mirror and a linear movement having various directions, thereby providing a high-resolution image.

Background Art

Recently, great numbers of projection display devices using lasers as light sources have been used. A projection display device may provide a subminiature image and an extra large image which a display such as a liquid crystal display panel (LCD) and a plasma display panel (PDP) have difficulty providing.

However, the projection display device may provide a low-quality image compared to those of other display devices in which a light is directly emitted from a screen, since the projection display device provides an image by projecting, to a screen, a light obtained by modulating a laser light source for each pixel.

The low-quality image is due to a speckle noise and a speckle pattern occurring when a laser projection display device is used. Thus, various methods of suppressing the speckle may be applied.

One speckle suppression method that is used, suppresses a speckle by shaking a diffuser. However, the method may cause a loss of light and may be unsuitable for an imaging device that requires a high brightness degree.

With a method of suppressing a speckle by shaking a beam using a galvomirror or a piezoelectric device such as a lead zirconate titanate (PZT), it is difficult to generate a progressing light as a parallel light. Thus, an image generated in a device such as a liquid crystal on silicon (LCoS) panel may shake on a screen and thus, by such device it is difficult to provide a high-resolution image.

Disclosure of Invention

Technical Goals

An aspect of the present invention provides a laser projection device including a speckle suppressor having a simple configuration including a phase modulation mirror and a moving stage. The speckle suppressor may suppress a speckle by modulating a phase of a laser beam provided from a light source to a phase unrecognizable to a human eye, minimize a loss of light, and display a speckle suppressed high-resolution image on a screen.

Technical solutions

According to an aspect of the present invention, there is provided a laser projection imaging device, the device including a light source configured to generate a laser beam, the light source including a red (R) laser, a green (G) laser, and a blue (B) laser, and a speckle suppressor configured to suppress a speckle from the laser beam provided from the light source, wherein the speckle suppressor includes a phase modulation mirror configured to suppress the speckle by reflecting the laser beam provided from the light source and modulating a phase and an angle, and a moving stage configured to move the phase modulation mirror, the moving stage coupled to the phase modulation mirror. Based on the configuration, a simple configuration of the speckle suppressor including the phase modulation mirror and the moving stage may suppress the speckle by modulating a phase of a laser beam provided from the light source to a phase unrecognizable by a human eye, minimize a loss of light, and display a speckle suppressed high-resolution image on a screen.

A reflective surface of the phase modulation mirror may have irregular or regular curves.

The reflective surface of the phase modulation mirror may be formed by at least one of an etching technique, a deposition technique, or a rod growth technique.

The reflective surface of the phase modulation mirror may be processed using at least one of silver (Ag), aluminum (Al), titanium (Ti), chrome (Cr), or nickel (Ni) based on a single-layer coating method.

The reflective surface of the phase modulation mirror may be processed using titanium dioxide ($TiO_2$) or silicon dioxide ($SiO_2$) based on a multiple-layer coating method.

The moving stage may be linearly movable in a forward direction, a backward direction, a vertical direction, or a horizontal direction, and is rotatable around a center point.

The device may further include a light module configured to form the laser beam reflected from the speckle suppressor into a plurality of light paths.

The light module may include a homogenizer having a microlens, a light pipe, a multimode optical fiber, an optical fiber bundle, and a multicore optical fiber.

The device may further include a digital micromirror device configured to increase a degree of definition of the laser beam passing through the speckle suppressor based on a light reflection principle, the digital micromirror device disposed to a rear of the light module, a micromirror device controller configured to control the digital micromirror device, and a beam extender configured to project a beam controlled through the digital micromirror device to a screen, the beam extender disposed to a rear of the digital micromirror device.

According to another aspect of the present invention, there is provided a speckle suppressor to suppress a speckle from a laser beam, the speckle suppressor including a phase modulation mirror configured to suppress a speckle by reflecting a laser beam and modulating a phase and an angle, and a moving stage configured to move the phase modulation mirror, the moving stage coupled to the phase modulation mirror.

A reflective surface of the phase modulation mirror may have irregular or regular curves formed by at least one of an etching technique, a deposition technique, or a rod growth technique.

The moving stage may be linearly movable in a forward direction, a backward direction, a vertical direction, or a horizontal direction, and is rotatable around a center point.

Effect

According to example embodiments, it is possible to suppress, by a simple configuration of a speckle suppressor including a phase modulation mirror and a moving stage, a speckle by modulating a phase of a laser beam provided from a light source to a phase unrecognizable by a human eye, minimize a loss of light, and display a speckle suppressed high-resolution image on a screen.

Brief Description of Drawings

FIG. 1 is a diagram illustrating a laser projection imaging device according to an embodiment.

FIG. 2 is a diagram illustrating a speckle suppressor according to an embodiment.

FIG. 3 is a diagram illustrating a process in which a laser beam is transmitted to a light module provided from a speckle suppressor illustrated in FIG. 1 according to an embodiment.

Best Mode for Carrying Out the Invention

Reference will now be made in detail to embodiments of the present invention, examples of which are illustrated in the accompanying drawings, wherein like reference numerals refer to the like elements throughout.

The following description illustrates one of various aspects of the present invention and constitutes part of a detailed description about the present invention.

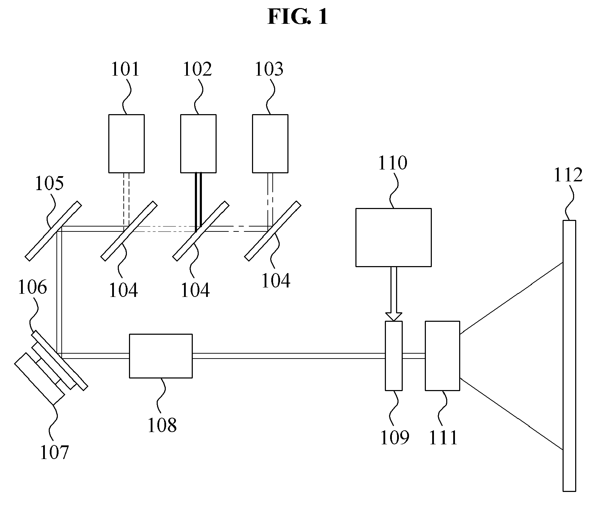

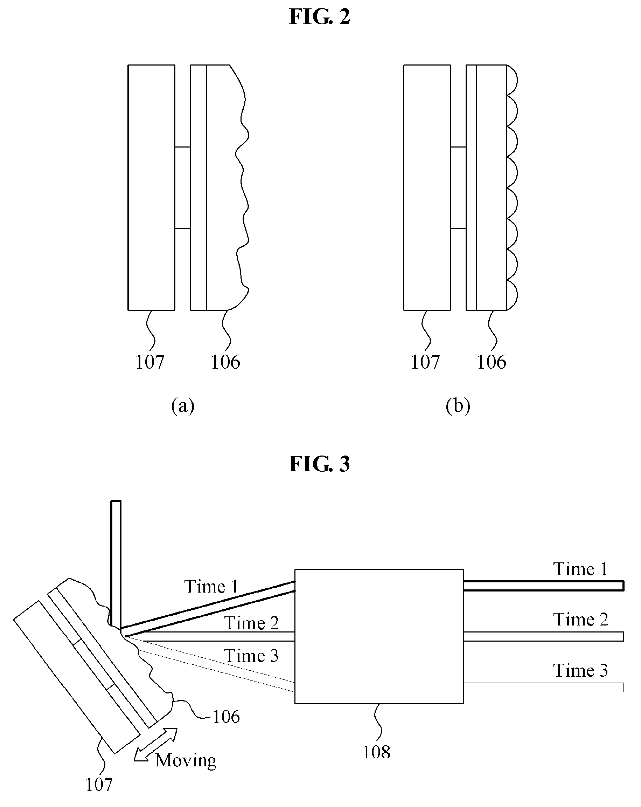

FIG. 1 is a diagram illustrating a laser projection imaging device according to an embodiment. FIG. 2 is a diagram illustrating a speckle suppressor according to an embodiment. FIG. 3 is a diagram illustrating a process in which a laser beam is transmitted to a light module provided from a speckle suppressor illustrated in FIG. 1 according to an embodiment.

Referring to FIG. 1, a laser projection imaging device 100 includes a light source including a red (R) laser 101, a green (G) laser 102, and a blue (B) laser 103, mirrors 104 and a reflection mirror 105 configured to reflect and transfer each of laser beams, for example, an R laser beam, a G laser beam, and a B laser beam, generated from the light source, a speckle suppressor configured to suppress a speckle from each of the R laser beam, the G laser beam, and the B laser beam provided from the light source, a light module 108 configured to multiplex a path of a laser beam provided by suppressing a speckle from the speckle suppressor, a digital micro mirror device 109 configured to increase a degree of definition of the laser beam, and a beam extender 111 configured to finally project a beam to a screen 112.

Based on the configuration, it is possible to suppress the speckle from the laser beam, such that a high-resolution image may be displayed on the screen 112.

Describing each configuration, as illustrated in FIG. 1, the light source includes the red laser 101 configured to emit a red laser beam, the green laser 102 configured to emit a green laser beam, and the blue laser 103 configured to emit a blue laser beam. The laser beams emitted from the aforementioned lasers are mutually parallel.

The red laser 101, the green laser 102, and the blue laser 103 include each of the mirrors 104, and the mirrors 104 are linearly disposed. Thus, the laser beams emitted from each of the red laser 101, the green laser 102, and the blue laser 103 are each reflected by one of the mirrors 104 and thereby combined, and the combined laser beams are reflected to the reflection mirror 105 disposed at one side of the light source and then transferred to the speckle suppressor.

Descriptions of the speckle suppressor configured to suppress the speckle from the laser beam by changing a reflective angle or modulating a phase of the provided laser beam will be provided hereinafter.

The path of the laser beam of which the speckle is suppressed by the speckle suppressor may be multiplexed and transferred to the light module 108, and then transferred to the digital micro mirror device 109.

The digital micromirror device 109 provides a high-definition image using a principle of reflection and the laser beam from the light module 108. Hundreds of thousands of reflective devices are in the micromirror device 109, and the reflective devices are selectively used by a micromirror device controller 110. The laser beam is provided to the beam extender 111 to implement the high-definition image.

The beam extender 111 is a portion configured to extend the laser beam from which the speckle is suppressed by the speckle suppressor to a large screen, for example, the screen 112.

The speckle suppressor is a portion configured to suppress the speckle from the laser beam provided from the light source. Through this, for example, a high-resolution image is displayed on the screen 112.

When a laser beam corresponding to a coherent light source is incident on a screen having a roughness greater than a fourth of a wavelength of the laser beam, reflected or transmitted light having different phases may reach an observer.

For example, in a case of a laser beam of a visible ray, a fourth of an intensity of a wavelength is less than or equal to a minimum 100 nanometers. A degree of the roughness of a general screen is approximately measured in micrometers.

The speckle may occur due to a difference between the wavelength of the laser beam and the roughness of the screen 112. In the example embodiments, a method of suppressing the speckle may be used to modulate a speckle pattern by changing a phase of the laser beam at a fast speed unrecognizable to a human eye and suppressing the speckle by obtaining speckle image information accumulated based on the modulation. Here, a colloid medium is used to change the phase of the laser beam at a fast speed unrecognizable to a human eye and the speckle is suppressed based on the change.

There are a size v for modulating a speckle form and a frequency v for modulating the speckle form. A speckle $I(x,y)$ accumulated when the speckle form is modulated using a frequency faster than a reaction speed of a human eye is expressed as Equation 1.

$$I(x,y) = \sum_{m,n-1}^{M} u_{0m} u_{0n} \sum_{k=-\infty}^{+\infty} J_k^2(v) \exp[j(\Psi_m - \Psi_n)] \qquad \text{... Equation 1}$$

Here, each of $u_{0m}$ and $u_{0n}$ refers to a mode of an electric field at an initial state, and there are total M modes. J refers to a Bessel function, and each of $\Psi_m$ and $\Psi_n$ refers to an initial phase of each mode. A phase of each mode is random, and an average of speckle intensities may be expressed as Equation 2 under an assumption that each mode is mutually uninfluenced.

$$\overline{I(x,y)} = A^2 M \qquad \text{... Equation 2}$$

In Equation 2, A refers to an amplitude of each electric field. A secondary moment of the speckle may be expressed using Equation 1, as Equation 3.

$$\overline{I^2(x,y)} = A^4 M^2 \left(1 + \sum_{k=-\infty}^{+\infty} J_k^4(v)\right), \qquad \text{... Equation 3}$$

A speckle contrast c indicating a speckle size may be expressed using Equations 2 and 3, as Equation 4.

$$c = \frac{\sigma_I}{\overline{I(x,y)}} = \left( \frac{\overline{I^2(x,y)} - \overline{I(x,y)}^2}{\overline{I(x,y)}^2} \right)^{1/2} = \left( \sum_{k=-\infty}^{+\infty} J_k^4(v) \right)^{1/2}$$

… Equation 4

Based on Equation 4, it may be estimated that the speckle contrast c may be decreased when the size v for modulating the speckle form is increased. Also, the speckle contrast c is uninfluenced by the frequency v for modulating the speckle form. Thus, the speckle controller 106 may modulate the frequency at the speed faster than the reaction speed of the human eye while maximizing the size v for modulating the speckle form, and this will be described hereinafter.

Referring to FIG. 2, a speckle suppressor includes a phase modulation mirror 106 configured to reflect a laser beam provided from a light source and modulate a phase and an angle, and a moving stage 107 configured to move the phase modulation mirror 106. The moving stage 107 is coupled to the phase modulation mirror 106.

Based on the configuration, it is possible to modulate a frequency according to the phase of the laser beam at a speed faster than a reaction speed of a human eye.

The phase modulation mirror 106 reflects a laser beam and transfers the reflected laser beam to a light module. The phase modulation mirror 106 may include a reflective surface having irregular curves as illustrated in (a) of FIG. 2. The phase modulation mirror 106 may include the reflective surface having regular curves as illustrated in (b) of FIG. 2.

Based on gradients of the curves of the reflective surfaces, a light path of the laser beam may be changed. Through this, phase modulation is possible, such that a speckle may be suppressed from the laser beam.

The reflective surface of the phase modulation mirror 106 may be provided in a regular form or an irregular form by various techniques. For example, the reflective surface of the phase modulation mirror 106 is formed by at least one of an etching technique, a deposition technique, or a rod growth technique. However, a manufacturing method of the reflective surface of the phase modulation mirror 106 is not limited thereto.

In addition, the reflective surface of the phase modulation mirror 106 is processed using at least one of silver (Ag), aluminum (Al), titanium (Ti), chrome (Cr), or nickel (Ni) based on a single-layer coating method. Through this, a reflection rate may be increased, thereby minimizing a light loss occurring when the laser beam passes through the speckle suppressor.

However, a coating processing method of the reflective surface of the phase modulation mirror 106 is not limited thereto. A multiple-layer coating method may be applied instead of the single-layer coating method. For example, the reflective surface is processed using titanium dioxide (TiO2) or silicon dioxide (SiO2). Through this, the reflection rate of the laser beam reflected to the phase modulation mirror 106 may be increased.

To modulate the phase of the laser beam reflected from the phase modulation mirror 106 and change a reflective angle of the laser beam, the phase modulation mirror 106 is coupled to the moving stage 107 which is movable.

Referring to FIG. 3, the moving stage 107 is linearly movable in a forward direction, a backward direction, a vertical direction, or a horizontal direction, and is rotatable around a center point. Thus, the moving stage 107 forms the reflected laser beam into multidirectional paths, that is, a plurality of paths, when the laser beam is provided from the light source to the phase modulation mirror 106 of the speckle suppressor.

For example, the laser beam is provided to the light module 108 by reflecting the laser beam in a first direction at a first point in time, a time 1, the laser beam is provided to the light module 108 by reflecting the laser beam in a second direction at a second point in time, a time 2, and the laser beam is provided to the light module 108 by reflecting the laser beam in a third direction at a third point in time, a time 3.

As described above, the laser beam may follow different reflection paths based on time since the moving stage 107 coupled to the phase modulation mirror 106 is movable in various directions and is rotatable around a center point.

Thus, in the speckle suppressor, the phase modulation mirror 106 is linearly movable in various directions and adjusts an angle, such that a speckle is suppressed by modulating a phase of the laser beam too fast for a human eye to recognize the change *)at a fast speed unrecognizable to a human eye.

The light module 108 is configured to form the laser beam reflected from the speckle suppressor into the multiple light paths.

The light module 108 includes a homogenizer having a micro lens, a light pipe, a multimode optical fiber, an optical fiber bundle, and a multicore optical fiber.

The light path and the phase of the laser beam are modulated by the speckle suppressor and the light module 108, and the modulated laser beam is incident on the screen 112 via the digital micromirror device 109 and the beam extender 111. Here, speckle patterns occurring according to time may overlap in a short period of time and then are incident on a human eye, such that information on an image from which the speckle is suppressed may be obtained.

Thus, a simple configuration of the speckle suppressor including the phase modulation mirror 106 and the moving stage 107 may suppress the speckle by modulating the phase of the laser beam provided from the light source to the phase unrecognizable by the human eye, minimize a loss of light, and display a speckle suppressed high-resolution image on a screen.

Although a few embodiments of the present invention have been shown and described, the present invention is not limited to the described embodiments. Instead, it would be appreciated by those skilled in the art that changes may be made to these embodiments without departing from the principles and spirit of the invention, the scope of which is defined by the claims and their equivalents.

**Claims**

1.  A laser projection imaging device, the device comprising:

    a light source configured to generate a laser beam, the light source comprising a red (R) laser, a green (G) laser, and a blue (B) laser; and
    a speckle suppressor configured to suppress a speckle from the laser beam provided from the light source, wherein the speckle suppressor comprises a phase modulation mirror configured to suppress the speckle by reflecting the laser beam provided from the light source and modulating a phase and an angle, and a moving stage configured to move the phase modulation mirror, the moving stage coupled to the phase modulation mirror.

2.  The device of claim 1, wherein a reflective surface of the phase modulation mirror has irregular or regular curves.

3.  The device of claim 2, wherein the reflective surface of the phase modulation mirror is formed by at least one of an etching technique, a deposition technique, or a rod growth technique.

4.  The device of claim 2, wherein the reflective surface of the phase modulation mirror is processed using at least one of silver (Ag), aluminum (Al), titanium (Ti), chrome (Cr), or nickel (Ni) based on a single-layer coating method.

5.  The device of claim of 2, wherein the reflective surface of the phase modulation mirror is processed using titanium dioxide (TiO2) or silicon dioxide (SiO2) based on a multiple-layer coating method.

6.  The device of claim 1, wherein the moving stage is linearly movable in a forward direction, a backward direction, a vertical direction, or a horizontal direction, and is rotatable around a center point.

7.  The device of claim 1, further comprising:

    a light module configured to form the laser beam reflected from the speckle suppressor into a plurality of light paths.

8.  The device of claim 1, wherein the light module comprises a homogenizer having a microlens, a light pipe, a multimode optical fiber, an optical fiber bundle, and a multicore optical fiber.

9.  The device of claim 7, further comprising:

    a digital micromirror device configured to increase a degree of definition of the laser beam passing through the speckle suppressor based on a light reflection principle, the digital micromirror device disposed to a rear of the light module;
    a micromirror device controller configured to control the digital micromirror device; and
    a beam extender configured to project a beam controlled through the digital micromirror device to a screen, the beam extender disposed to a rear of the digital micromirror device.

10. A speckle suppressor to suppress a speckle from a laser beam, the speckle suppressor comprising:

    a phase modulation mirror configured to suppress a speckle by reflecting a laser beam and modulating a phase and an angle; and
    a moving stage configured to move the phase modulation mirror, the moving stage coupled to the phase modulation mirror.

11. The speckle suppressor of claim 10, wherein a reflective surface of the phase modulation mirror has irregular or regular curves formed by at least one of an etching technique, a deposition technique, or a rod growth technique.

12. The speckle suppressor of claim 10, wherein the moving stage is linearly movable in a forward direction, a backward direction, a vertical direction, or a horizontal direction, and is rotatable around a center point.

**FIG. 1**

**FIG. 2**

107  106

(a)

107  106

(b)

**FIG. 3**

Time 1

Time 2

Time 3

Time 1

Time 2

Time 3

106

Moving

107

108

## INTERNATIONAL SEARCH REPORT

| International application No. |
| --- |
| **PCT/KR2014/010842** |

**A. CLASSIFICATION OF SUBJECT MATTER**

*H04N 9/31(2006.01)i, G03B 21/00(2006.01)i*

According to International Patent Classification (IPC) or to both national classification and IPC

**B. FIELDS SEARCHED**

Minimum documentation searched (classification system followed by classification symbols)

H04N 9/31

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)

eKOMPASS (KIPO internal) & Keywords: LASER, SPECKLE, PHASE, ANGLE, SHIFT, and similar terms

**C. DOCUMENTS CONSIDERED TO BE RELEVANT**

| Category* | Citation of document, with indication, where appropriate, of the relevant passages | Relevant to claim No. |
| --- | --- | --- |
| X | JP 2012-527646 A (EASTMAN KODAK COMPANY) 08 November 2012 Abstract and paragraphs [0008], [0028]-[0034], [0044]-[0045], [0052]-[0053], [0066] | 1-2,3,6,10,11,12 |
| Y | | 4-5,7-9 |
| Y | JP 2002-341269 A (SONY CORP) 27 November 2002 Abstract and paragraphs [0016]-[0019] | 4-5 |
| A | | 1-3,6-12 |
| Y | JP 2002-198292 A (NIKON CORP) 12 July 2002 Abstract and paragraphs [0036], [0086] | 7-9 |
| A | | 1-6,10-12 |
| A | JP 2011-523468 A (EASTMAN KODAK COMPANY) 11 August 2011 Abstract and claim 1 | 1-12 |

☐ Further documents are listed in the continuation of Box C. ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 05 FEBRUARY 2015 (05.02.2015) | **05 FEBRUARY 2015 (05.02.2015)** |

| Name and mailing address of the ISA/KR | Authorized officer |
| --- | --- |
| Korean Intellectual Property Office Government Complex-Daejeon, 189 Seonsa-ro, Daejeon 302-701, Republic of Korea | |
| Facsimile No. 82-42-472-7140 | Telephone No. |

Form PCT/ISA/210 (second sheet) (July 2009)

INTERNATIONAL SEARCH REPORT
Information on patent family members

International application No.

**PCT/KR2014/010842**

| Patent document cited in search report | Publication date | Patent family member | Publication date |
|---|---|---|---|
| JP 2012-527646 A | 08/11/2012 | CN 102483523 A | 30/05/2012 |
| | | EP 2433174 A2 | 28/03/2012 |
| | | JP 05-525042B2 | 18/06/2014 |
| | | US 2010-0296065 A1 | 25/11/2010 |
| | | US 8366281 B2 | 05/02/2013 |
| | | WO 2010-134980 A2 | 25/11/2010 |
| | | WO 2010-134980 A3 | 03/03/2011 |
| JP 2002-341269 A | 27/11/2002 | JP 4582380 B2 | 17/11/2010 |
| JP 2002-198292 A | 12/07/2002 | NONE | |
| JP 2011-523468 A | 11/08/2011 | CN 102027747 A | 20/04/2011 |
| | | CN 102027747 B | 27/11/2013 |
| | | EP 2274918 A1 | 19/01/2011 |
| | | JP 05-484449B2 | 07/05/2014 |
| | | TW I444748B | 11/07/2014 |
| | | TW 201001047 A | 01/01/2010 |
| | | US 2009-0284713 A1 | 19/11/2009 |
| | | US 7959297 B2 | 14/06/2011 |
| | | WO 2009-139865 A1 | 19/11/2009 |

Form PCT/ISA/210 (patent family annex) (July 2009)